# EUROPEAN PATENT APPLICATION

(11) **EP 2 706 452 A2**
(43) Date of publication of application: **12.03.2014**
(21) Application number: 13182808.9
(22) Date of filing: 03.09.2013
(51) Int. Cl.: G06F 3/06

(54) **Wear management apparatus and method for storage system**

(30) Priority: 05.09.2012 KR 20120098312
(71) Applicant: Samsung Electronics Co., Ltd, Gyeonggi-do 443-742 (KR)
(72) Inventor: Gu, Bon-Cheol, Gyeonggi-do (KR); Lee, Ju-Pyung, Gyeonggi-do (KR)
(74) Representative: Grünecker, Kinkeldey, Stockmair & Schwanhäusser

(57) **Abstract**

A wear management apparatus and a wear management method of a storage system including storage nodes are provided. The wear management apparatus includes a monitor unit configured to collect status information about each of the storage nodes. The wear management apparatus further includes a wear management unit configured to establish a wear progress model with respect to the storage nodes based on the status information, and control a wear acceleration index of each of the storage nodes based on the wear progress model and a wear management policy.

## Description

### 1. Field

The following description relates to a wear management apparatus and a wear management method of a storage system including storage nodes.

### 2. Description of the Related Art

Generally, a limited number of erase operations can be performed in a flash memory. If the erase operations have been performed the limited number of times, a corresponding cell becomes worn out, so that a read operation or a write operation is not available in the corresponding cell. Due to this feature of the flash memory, wear management of a storage medium based on the flash memory is considered important. In particular, since it is difficult to replace only a portion of a storage device, such as a Solid State Disk (SSD), erase operations have to be performed appropriately on an overall memory area of the storage device in order to prevent a specific memory area from being worn out.

### SUMMARY

In one general aspect, there is provided a wear management apparatus of a storage system including storage nodes, the wear management apparatus including a monitor unit configured to collect status information about each of the storage nodes. The wear management apparatus further includes a wear management unit configured to establish a wear progress model with respect to the storage nodes based on the status information, and control a wear acceleration index of each of the storage nodes based on the wear progress model and a wear management policy.

In another general aspect, there is provided a wear management method of a storage system including storage nodes, the wear management method including collecting status information about each of the storage nodes. The wear management method further includes establishing a wear progress model with respect to the storage nodes based on the status information, and controlling a wear acceleration index of each of the storage nodes based on the wear progress model and a wear management policy.

Other features and aspects will be apparent from the following detailed description, the drawings, and the claims.

### BRIEF DESCRIPTION OF THE DRAWINGS

FIG. 1 is a block diagram illustrating an example of a storage system including a wear management apparatus.

FIG. 2 is a block diagram illustrating an example of a wear management apparatus.

FIG. 3 is a graph illustrating an example of a relationship between a wear acceleration index and a free space ratio.

FIGS. 4A to 4C are graphs illustrating examples of wear management policies.

FIGS. 5A to 5B are diagrams illustrating examples of methods of adjusting wear acceleration indexes of storage nodes.

FIG. 6 is a flowchart illustrating an example of a wear management method.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and methods, apparatuses, and/or systems described herein will suggest themselves to those of ordinary skill in the art. Also, descriptions of well-known functions and constructions may be omitted for increased clarity and conciseness.

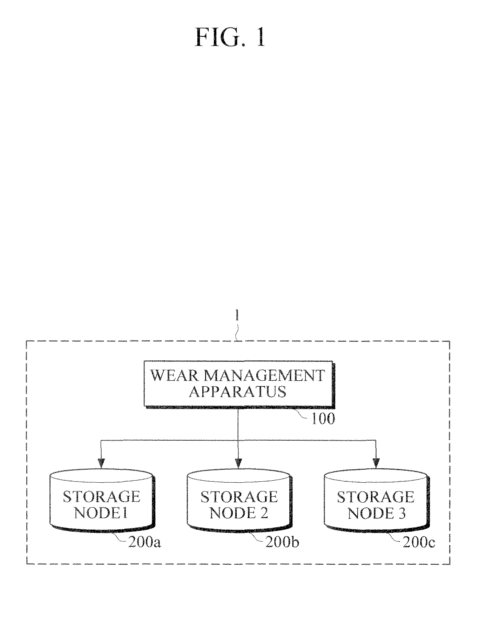

FIG. 1 is a block diagram illustrating an example of a storage system 1 including a wear management apparatus 100. Referring to FIG. 1, the storage system 1 further includes storage nodes 200a, 200b and 200c, i.e., storage nodes 1, 2 and 3. Each of the storage nodes 200a, 200b and 200c may be a storage medium based on a NAND flash memory, such as a Solid State Disk (SSD), or may be a terminal, such as a computer and a tablet PC, which includes the storage medium to perform distributed processing.

FIG. 1 illustrates the storage system 1 including the three storage nodes 200a, 200b and 200c for the sake of explanation, but is merely an example, and a number of storage nodes may be more or less than three. The wear management apparatus 100 may be included in the storage system 1 as illustrated in FIG. 1, or may be separately embedded in hardware.

The wear management apparatus 100 collects status information about each of the storage nodes 200a, 200b and 200c, and sets and adjusts a wear acceleration index of each of the storage nodes 200a, 200b and 200c based on the collected status information, to support wear management of the storage system 1. The wear acceleration index is used as a yardstick to evaluate how an erase operation affects a flash memory-based storage medium to be worn out. The wear acceleration index is a ratio of an erase operation performed in the storage medium to a corresponding write operation. In other words, the wear acceleration index indicates whether a respective storage node is to be worn out (i.e., whether erase operations are to be performed on the respective node) before, simultaneously with, or after other storage nodes.

The wear management apparatus 100 sets and adjusts the wear acceleration index of each of the storage nodes 200a, 200b and 200c based on a predetermined wear management policy of the storage system 1. For example, the wear management apparatus 100 predetermines the wear management policy based on a desired performance of the storage system 1, so that the wear acceleration index of each of the storage nodes 200a, 200b and 200c is equal to one another, or is different from one another to wear a predetermined storage node (for example, the storage node 1 200a) before other storage nodes.

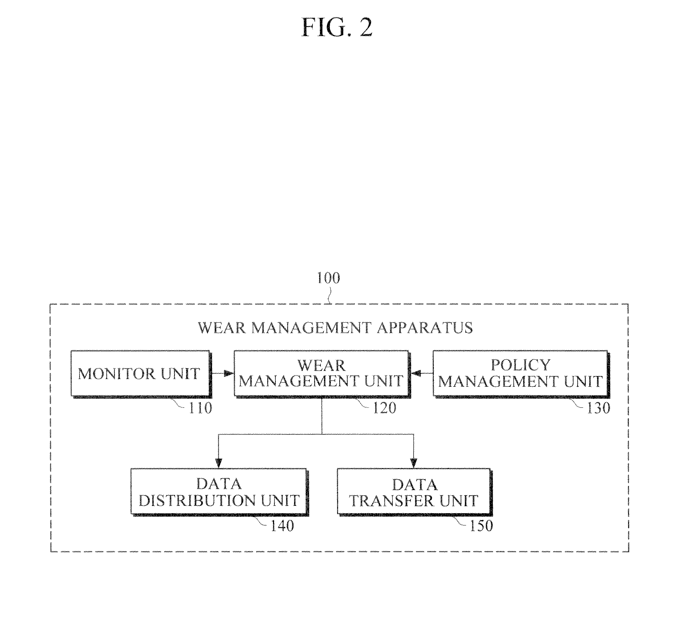

FIG. 2 is a block diagram illustrating an example of the wear management apparatus 100. Referring to FIG. 2, the wear management apparatus 100 includes a monitor unit 110, a wear management unit 120, a policy management unit 130, a data distribution unit 140, and a data transfer unit 150.

The monitoring unit 110 collects the status information about each of the storage nodes 200a, 200b and 200c. The status information may include an overall capacity, an amount of valid data, a distribution of the data, and/or a wear level of the data. The overall capacity refers to a capacity for data storage, and the amount of the valid data refers to an amount of the currently-stored data. The distribution of the data refers to a physical location of the data, and a wear level of the data refers to an amount of the data that is worn out due to an erase operation. An endurance of each of the storage nodes 200a, 200b and 200c may be predicted based on the wear level. The endurance is a value corresponding to, for example, an amount of the data that is not worn out, and/or a number of erase operations that are to be performed to wear the data.

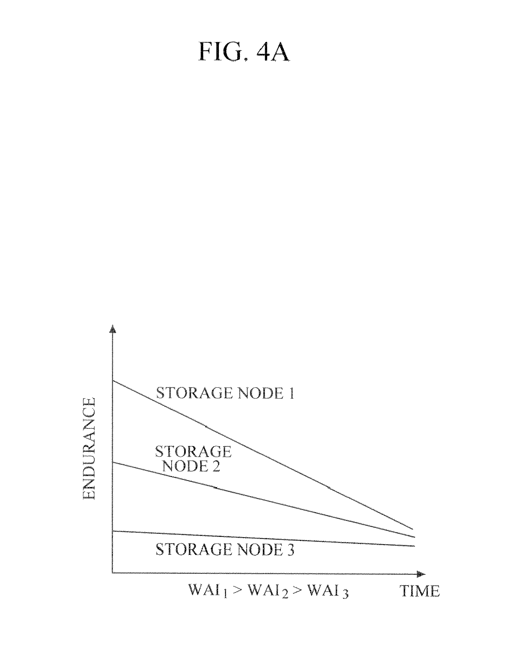

The wear management unit 120 establishes a wear progress model based on the collected status information. In more detail, the wear progress model is established with respect to the storage nodes 200a, 200b and 200c, and may include one or more graphs as illustrated in FIGS. 4A to 4C described below. The wear management unit 120 controls the wear acceleration index of each of the storage nodes 200a, 200b and 200c based on the established wear progress model and the predetermined wear management policy. For example, the wear management unit 120 may control the wear acceleration index by adjusting a free space ratio of each of the storage nodes 200a, 200b and 200.

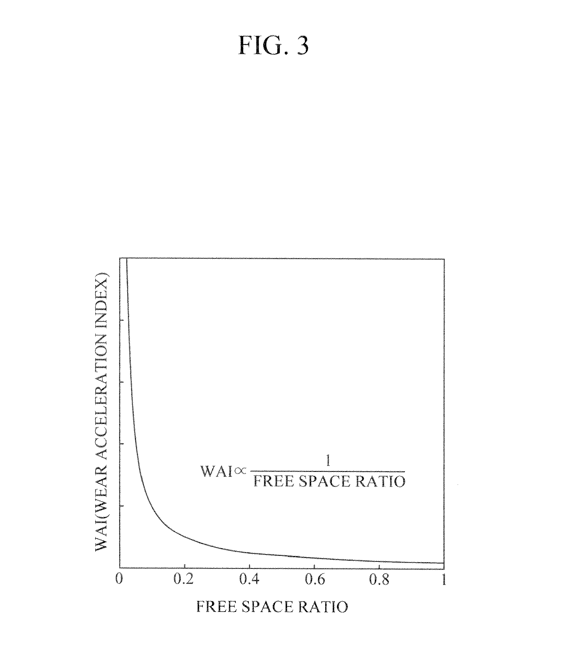

FIG. 3 is a graph illustrating an example of a relationship between the wear acceleration index and the free space ratio. Referring to FIG. 3, the wear acceleration index of each of the storage nodes 200a, 200b and 200c is inclined to be in inverse proportion to the free space ratio of each of the storage nodes 200a, 200b and 200c. Hence, the wear management unit 120 of FIG. 2 decreases the wear acceleration index by increasing the free space ratio, and increases the wear acceleration index by decreasing the free space ratio.

Referring again to FIG. 2, the policy management unit 130 predetermines the wear management policy based on the desired performance of the storage system 1. The wear management policy may include a policy of equally wearing the storage nodes 200a, 200b and 200c, a policy of sequentially wearing a storage node (for example, the storage node 1 200a) including the greatest endurance among the endurances of the storage nodes 200a, 200b and 200c, or a policy of completely wearing a storage node (for example, the storage node 1 200a) including the least endurance among the endurances of the storage nodes 200a, 200b and 200c .

FIGS. 4A to 4C are graphs illustrating examples of wear management policies. Each of the graphs illustrates the endurance of each of the storage nodes 1, 2 and 3, over time.

FIG. 4A is a graph illustrating a wear management policy of equally wearing the storage nodes 1, 2 and 3. In more detail, each of the storage nodes 1, 2 and 3 is set to include a wear acceleration index (WAI) based on the endurance of each of the storage nodes 1, 2 and 3, whereby the storage nodes 1, 2 and 3 are worn out almost simultaneously. That is, since the endurance of each of the storage nodes 3, 2 and 1 is respectively greater in sequence, as shown in FIG. 4A, each of the storage nodes 3, 2 and 1 is set to include the wear acceleration index that is respectively greater in sequence, whereby the storage nodes 1, 2, and 3 are worn out at almost the same time. This wear management policy is desired when it is economically efficient to replace all storage nodes belonging to a storage system, or when it is impossible to replace a storage node before other storage nodes.

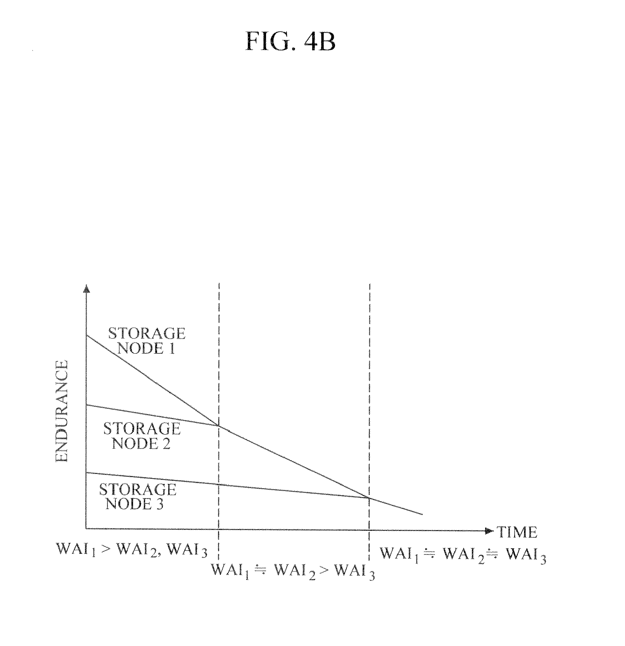

FIG. 4B is a graph illustrating a wear management policy of sequentially wearing a storage node including the greatest endurance among the endurances of the storage nodes 1, 2 and 3. In more detail, the storage node including the greatest endurance is set to include the greatest wear acceleration index (WAI) among the wear acceleration indexes of the storage nodes 1, 2 and 3, so that the storage node including the greatest endurance is worn out the fastest. Referring to FIG 4B, the storage node 1 includes the greatest endurance among the endurances of the storage nodes 1, 2, and 3, and thus, is set to include the greatest wear acceleration index among the wear acceleration indexes of the storage nodes 1, 2 and 3, so that the storage node 1 is worn out faster than the storage nodes 2 and 3. When the endurance of the storage node 1 is decreased to be equal to the endurance of the storage node 2, the storage nodes 1 and 2 are adjusted to include the same wear acceleration index, which is greater than the wear acceleration index of the storage node 3, so that the storage nodes 1 and 2 are worn out faster than the storage node 3. When the endurance of the storage nodes 1 and 2 is decreased to be equal to the endurance of the storage node 3, the storage nodes 1, 2 and 3 are adjusted to include the same wear acceleration index, so that the storage nodes 1, 2 and 3 are worn out concurrently. This wear management policy is desired when a storage system needs to be entirely replaced.

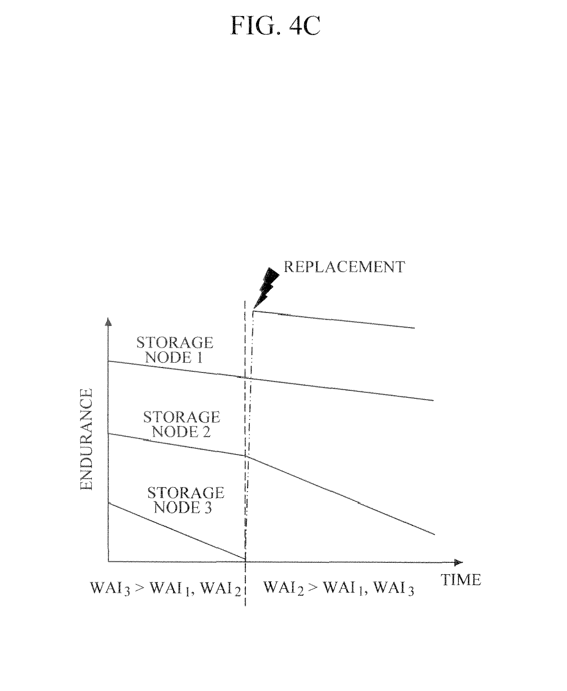

FIG. 4C is a graph illustrating a wear management policy of completely wearing a storage node including the least endurance among the endurances of the storage nodes 1, 2 and 3. In more detail, the storage node including the least endurance is set to include the greatest wear acceleration index (WAI) among the wear acceleration indexes of the storage nodes 1, 2 and 3, so that the storage node including the least endurance is worn out the fastest. When the storage node including the least endurance is completely worn out, this storage node is replaced with a new storage node. Referring to FIG. 4C, the storage node 3 includes the least endurance among the endurances of the storage nodes 1, 2, and 3, and thus, is set to include the greatest wear acceleration index among the wear acceleration indexes of the storage nodes 1, 2 and 3, so that the storage node 3 is worn out faster than the storage nodes 1 and 2. When the storage node 3 is completely worn out, the storage node 3 is replaced with a new storage node. Next, the storage node 2 includes the least endurance, and thus, is adjusted to include the greatest wear acceleration index, so that the storage node 2 is worn out faster than the storage node 1 and the new storage node. When the storage node 2 is completely worn out, the storage node 2 is replaced with another new storage node. This wear management policy is desired when it is possible and inexpensive to replace each storage node separately, instead of replacing all storage nodes at once.

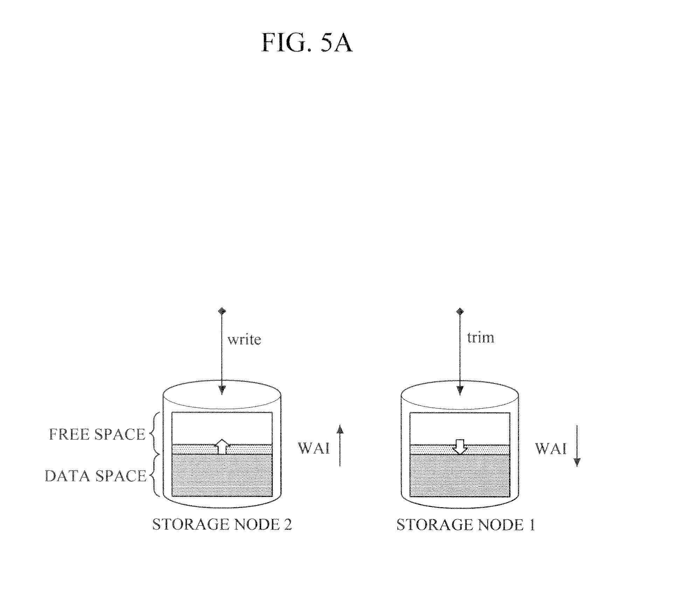

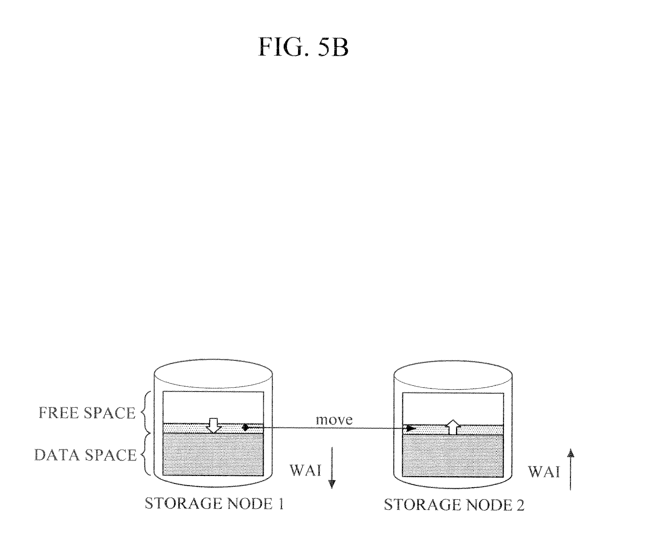

FIGS. 5A and 5B are diagrams illustrating examples of methods of adjusting wear acceleration indexes of storage nodes. Referring to FIGS. 1, 2, 5A and 5B, the methods of adjusting the wear acceleration indexes of the storage nodes 1 and 2 in the wear management unit 120 will be provided. As illustrated in FIG. 2, the wear management apparatus 100 further includes the data distribution unit 140 and the data transfer unit 150.

The data distribution unit 140 stores data in a predetermined storage node (for example, the storage node 1 200a) using a write operation, and deletes the data using a trim operation. In more detail, the wear management unit 120 controls the data distribution unit 140 to store or delete data (e.g., a wear acceleration index (WAI)) in the predetermined storage node based on the established wear progress model and the predetermined wear management policy with respect to the storage nodes 200a, 200b and 200c. FIG. 5A illustrates the wear management unit 120 controlling the data distribution unit 140 to perform a write operation in the storage node 2 to increase the wear acceleration index of the storage node 2, and to perform a trim operation in the storage node 1 to reduce the wear acceleration index of the storage node 1. The data distribution unit 140 may adjust the wear acceleration index of the storage node 1 or 2 by adjusting a ratio of a free space to a data space in the storage node 1 or 2.

Referring again to FIG. 2, the data transfer unit 150 moves data from a predetermined storage node (for example, the storage node 1 200a) to another storage node (for example, the storage node 2 200b) using a move operation. In more detail, the wear management unit 120 controls the data transfer unit 150 to move data (e.g., a wear acceleration index (WAI)) from the predetermined storage node to the other storage node based on the established wear progress model and the predetermined wear management policy with respect to the storage nodes 200a, 200b and 200c. FIG. 5B illustrates the wear management unit 120 controlling the data transfer unit 150 to move data from the storage node 1 to the storage node 2, to decrease the wear acceleration index of the storage node 1 while increasing the wear acceleration index of the storage node 2. The data transfer unit 150 may adjust the wear acceleration index of the storage node 1 or 2 by adjusting the ratio of the free space to the data space in the storage node 1 or 2.

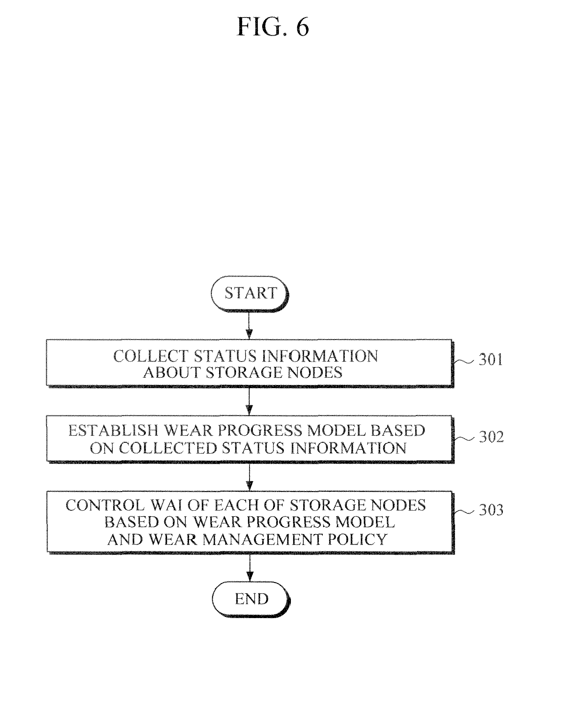

FIG. 6 is a flowchart illustrating an example of a wear management method. Referring to FIG. 6, the wear management method of the wear management apparatus 100 described in FIGS. 1, 2, 5A and 5B will be provided. Since the wear management apparatus 100 is described in detail with reference to FIGS. 1, 2, 5A and 5B, further description about the wear management apparatus 100 will not be provided.

In an operation 301, the wear management apparatus 100 collects the status information about each of the storage nodes 200a, 200b and 200c. The status information may include an overall capacity, an amount of valid data, a distribution of the data, and/or a wear level of the data.

In an operation 302, the wear management apparatus 100 establishes the wear progress model based on the collected status information in 302. The wear progress model is established with respect to the storage nodes 200a, 200b and 200c.

In an operation 303, the wear management apparatus 100 controls the wear acceleration index (WAI) of each of the storage nodes 200a, 200b and 200c based on the established wear progress model and the predetermined wear management policy with respect to the storage nodes 200a, 200b and 200c. The wear acceleration index of each of the storage nodes 200a, 200b and 200c may be controlled by adjusting the free space ratio of each of the storage nodes 200a, 200b and 200c. As illustrated in FIG. 3, the wear acceleration index is in inverse proportion to the free space ratio. Hence, the wear acceleration index is decreased by increasing the free space ratio, and is increased by decreasing the free space ratio.

As illustrated in FIGS. 4A to 4C, the wear management policy may include the policy of equally wearing the storage nodes 200a, 200b and 200c, the policy of sequentially wearing a storage node (for example, the storage node 1 200a) including the greatest endurance among the endurances of the storage nodes 200a, 200b and 200c, or the policy of completely wearing a storage node (for example, the storage node 1 200a) including the least endurance among the endurances of the storage nodes 200a, 200b and 200c. As described above with reference to FIGS. 5A to 5B, the wear acceleration index may be controlled by storing data in a predetermined storage node using the write operation, or by deleting the data from the predetermined storage node using the trim operation. In addition, the wear acceleration index may be controlled by moving data from a predetermined storage node to another storage node.

The units described herein may be implemented using hardware components and software components. For example, the hardware components may include microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, that independently or collectively instructs or configures the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more computer readable recording mediums. The computer readable recording medium may include any data storage device that can store data which can be thereafter read by a computer system or processing device. Examples of the non-transitory computer readable recording medium include read-only memory (ROM), random-access memory (RAM), CD-ROMs, magnetic tapes, floppy disks, optical data storage devices. Also, functional programs, codes, and code segments accomplishing the examples disclosed herein can be easily construed by programmers skilled in the art to which the examples pertain based on and using the flow diagrams and block diagrams of the figures and their corresponding descriptions as provided herein.

As a non-exhaustive illustration only, a terminal described herein may refer to mobile devices such as a cellular phone, a personal digital assistant (PDA), a digital camera, a portable game console, and an MP3 player, a portable/personal multimedia player (PMP), a handheld e-book, a portable laptop PC, a global positioning system (GPS) navigation, a tablet, a sensor, and devices such as a desktop PC, a high definition television (HDTV), an optical disc player, a setup box, a home appliance, and the like that are capable of wireless communication or network communication consistent with that which is disclosed herein.

Flash memory devices and/or memory controllers may be included in various types of packages. For example, the flash memory devices and/or memory controllers may be embodied using packages such as Package on Packages (PoPs), Ball Grid Arrays (BGAs), Chip Scale Packages (CSPs), Plastic Leaded Chip Carrier (PLCC), Plastic Dual In-Line Package (PDIP), Die in Waffle Pack, Die in Wafer Form, Chip On Board (COB), Ceramic Dual In-Line Package (CERDIP), Plastic Metric Quad Flat Pack (MQFP), Quad Flatpack (QFP), Small Outline Integrated Circuit (SOIC), Shrink Small Outline Package (SSOP), Thin Small Outline (TSOP), Thin Quad Flatpack (TQFP), System In Package (SIP), Multi Chip Package (MCP), Wafer-level Fabricated Package (WFP), Wafer-Level Processed Stack Package (WSP), and the like.

The flash memory devices and/or the memory controllers may constitute memory cards. In this case, the memory controllers may be constructed to communicate with an external device for example, a host using any one of various types of interface protocols such as a Universal Serial Bus (USB), a Multi Media Card (MMC), a Peripheral Component Interconnect-Express (PCI-E), Serial Advanced Technology Attachment (SATA), Parallel ATA (PATA), Small Computer System Interface (SCSI), Enhanced Small Device Interface (ESDI), and Integrated Drive Electronics (IDE).

Flash memory devices may be non-volatile memory devices that can maintain stored data even when power is cut off. According to an increase in the use of mobile devices such as a cellular phone, a personal digital assistant (PDA), a digital camera, a portable game console, and an MP3 player, the flash memory devices may be more widely used as data storage and code storage. The flash memory devices may be used in home applications such as a high definition television (HDTV), a DVD, a router, and a Global Positioning System (GPS).

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

## Claims

1. A wear management apparatus of a storage system comprising storage nodes, the wear management apparatus comprising:
a monitor unit configured to collect status information about each of the storage nodes; and
a wear management unit configured to
establish a wear progress model with respect to the storage nodes based on the status information, and
control a wear acceleration index of each of the storage nodes based on the wear progress model and a wear management policy.

2. The wear management apparatus of claim 1, wherein the wear management unit is further configured to adjust a free space ratio of each of the storage nodes to control the wear acceleration index.

3. The wear management apparatus of claim 1 or 2, further comprising:
a data distribution unit configured to store data in each of the storage nodes, and delete the data from each of the storage nodes,
wherein the wear management unit is further configured to control the data distribution unit to store or delete the data, to control the wear acceleration index.

4. The wear management apparatus of one of claims 1 to 3, further comprising:
a data transfer unit configured to move data among the storage nodes,
wherein the wear management unit is further configured to control the data transfer unit move the data, to control the wear acceleration index.

5. The wear management apparatus of one of claims 1 to 4, wherein the status information comprises an overall capacity, or an amount of valid data, or a distribution of the data, or a wear level of the data, or any combination thereof.

6. The wear management apparatus of one of claims 1 to 5, wherein the wear management policy comprises a policy of equally wearing the storage nodes, or a policy of sequentially wearing a storage node among the storage nodes that comprises a greatest endurance among endurances of the storage nodes, or a policy of completely wearing a storage node among the storage nodes that comprises a least endurance among the endurances of the storage nodes.

7. The wear management apparatus of one of claims 1 to 6, wherein each of the storage nodes comprises a NAND flash memory.

8. The wear management apparatus of one of claims 1 to 7, wherein if the wear management policy comprises a policy of equally wearing the storage nodes, the wear management unit is further configured to control the wear acceleration index based on an endurance of each of the storage nodes to wear the storage nodes almost simultaneously.

9. The wear management apparatus of one of claims 1 to 8, wherein if the wear management policy comprises a policy of sequentially wearing a storage node among the storage nodes that comprises a greatest endurance among endurances of the storage nodes, the wear management unit is further configured to control the wear acceleration index of the storage node to comprise a greatest wear acceleration index among the wear acceleration index of each of the storage nodes, to wear the storage node the fastest.

10. The wear management apparatus of one of claims 1 to 9, wherein if the wear management policy comprises a policy of completely wearing a storage node among the storage nodes that comprises a least endurance among the endurances of the storage nodes, the wear management unit is further configured to:
control the wear acceleration index of the storage node to comprise a greatest wear acceleration index among the wear acceleration index of each of the storage nodes, to wear the storage node the fastest; and
replace the storage node with a new storage node when the storage node is completely worn out.

11. A wear management method of a storage system comprising storage nodes, the wear management method comprising:
collecting status information about each of the storage nodes;
establishing a wear progress model with respect to the storage nodes based on the status information; and
controlling a wear acceleration index of each of the storage nodes based on the wear progress model and a wear management policy.

12. The wear management method of claim 11, adapted to operate the wear management apparatus of one of claims 1 to 10.
